# EUROPEAN PATENT SPECIFICATION

(11) **EP 2 645 062 B1**
(45) Date of publication and mention of the grant of the patent: **15.03.2017**
(21) Application number: 13153023.0
(22) Date of filing: 29.01.2013
(51) Int. Cl.: G01C 21/34

(54) **Route search system and method for electric automobile**
Routensuchsystem und Verfahren für elektrische Automobile
Procédé et système de recherche d'itinéraire pour véhicule automobile électrique

(30) Priority: 30.03.2012 JP 2012080595
(43) Date of publication of application: 02.10.2013
(73) Proprietor: HITACHI, LTD., Chiyoda-ku Tokyo 100-8280 (JP)
(72) Inventor: Kiyama, Noboru, Chiyoda-ku, Tokyo 100-8220 (JP); Kashiyama, Masamori, Chiyoda-ku, Tokyo 100-8220 (JP); Kobayashi, Yuichi, Chiyoda-ku, Tokyo 100-8220 (JP); Osafune, Tatsuaki, Chiyoda-ku, Tokyo 100-8220 (JP)
(74) Representative: MERH-IP Matias Erny Reichl Hoffmann Patentanwälte PartG mbB

(56) References cited:
- DE-A1-102010 014 291
- JP-A- 2011 214 930
- JP-A- 2012 002 778
- US-A- 5 790 976
- US-A1- 2011 032 110
- US-A1- 2011 288 765

## Description

### BACKGROUND

The disclosed subject matter relates to a technique of a route search system and a route search method for an electric automobile.

In recent years, developments and sales of electric automobiles by automobile manufacturers have been actively performed. However, a distance that an electric automobile can travel by being charged once (a driving range) is about 200 km, which is short compared with a driving range of a gasoline car. Therefore, when traveling a long distance with the electric automobile, a driver charges the battery using charging stations instead of gas stations.

The charging stations roughly include a normal charging station and a quick charging station. The normal charging station is relatively widely spread. However, it takes four to eight hours or more to fully charge an electric automobile. In the quick charging station, it takes only thirty minutes to fully charge an electric automobile. However, the quick charging station is not widely spread because equipment costs are high.

Because of the abovementioned reasons, when a user of an electric automobile travels a long distance, the user always concerns about a state of charge (SoC) and the locations of charging stations. The concern prevents the spread of electric automobiles.

Concerning this problem, Japanese Patent Application Laid-Open No. H10-170293 discloses a technique for searching for, according to a state of charge of an electric automobile, a route on which the number of times the electric automobile passes through charging stations is the smallest. Japanese Patent Application Laid-Open No. 2006-112932 discloses a technique for preferentially presenting a route on which an automobile passes through quick charging stations where charging times are as short as possible.

In US 5,790,976 A, a route finder device for a motor vehicle is described. Said device contains a data input unit for inputting destinations for a journey, a road network memory, and a computer unit for determining one or more possible routes from the location to the destination including an energy supply process which may be required.

In JP 2012 002778 A, a vehicle having a navigation system is described. It is possible to set a route and charging spots so as to not overlap the timing of using the charging spots. The navigation system is provided with a client terminal and a center server and requests a route search to a destination. The client terminal transmits the vehicle information to the central server and said central server calculates the route to the destination from the current position also considering the charging of the vehicle.

In JP 2011 214930 A, a car navigation system, which considers the charge waiting time information is described. Specifically, the queue formed in a charging station for electric vehicles is considered.

### SUMMARY

In the related art, charging stations are selected to prevent a battery from being emptied and reduce a traveling distance. However, in such a route determination, time required to reach a destination is not always appropriate. This is because, since, in charging stations, an electric automobile is charged with electric power necessary for reaching the next charging stations, it is not seen, to further reduce the time required to reach the destination, how much electric power should be charged in the charging stations that the electric automobile passes through.

This specification discloses a route search system and a route search method for an electric automobile that make it possible to more appropriately search for a route of the electric automobile.

This specification discloses a route search system and a route search method for an electric automobile that can search for a route on which time required to reach a destination is shorter.

This specification discloses a route search system and a route search method for an electric automobile that can specify, to further reduce time required to reach a destination, charging stations that the electric automobile pass through.

A route search system according to an embodiment includes a route-search processing section configured to search for a route from a first point to a second point for an electric automobile provided with a battery. When the electric automobile cannot reach the second point from the first point without the battery being charged in a charging station halfway, the route-search processing section specifies one or two or more charging stations, which the electric automobile is to pass through in order to reach the second point from the first point in a shorter time including a charging time in each of the charging stations and moving times among the charging stations, and derives a route for reaching the second point from the first point passing through the specified charging stations.

The details of one or more implementations of the subject matter described in the specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1 shows a configuration example of a route search system for electric automobiles according to an embodiment;
Fig. 2 shows an example of an internal configuration of a telematics center 100;
Fig. 3 shows an example of an internal configuration of an electric automobile 101;
Fig. 4 shows an example of an internal configuration of a charging station 102;
Fig. 5 shows an example of an internal configuration of a display terminal 103;
Fig. 6 shows a data configuration example of a charging-station information DB 216;
Fig. 7 shows a data configuration example of a full/vacancy information management DB 413;
Fig. 8 shows a data configuration example of an inter-charging-station-route information DB managed by the telematics center 100;
Fig. 9 exemplifies a flowchart of an inter-charging-station-route-search processing section of the telematics center 100;
Fig. 10 exemplifies a flowchart of route search processing in the route search system;
Fig. 11 exemplifies a flowchart of route search processing in the telematics center 100;
Fig. 12 exemplifies a flowchart of moving cost calculation processing;
Fig. 13 shows a display example of a route search setting screen in the display terminal 103; and
Fig. 14 shows a display example of a route search result screen in the display terminal 103.

### DESCRIPTION OF THE EMBODIMENT

In an embodiment, a route on which an electric automobile can reach a destination from a departure place in a shorter time passing through charging stations is searched for. The electric automobile is not limited to a passenger vehicle,
a truck, and the like and may be an electric motorcycle and the like. The embodiment is explained below with reference to the drawings.

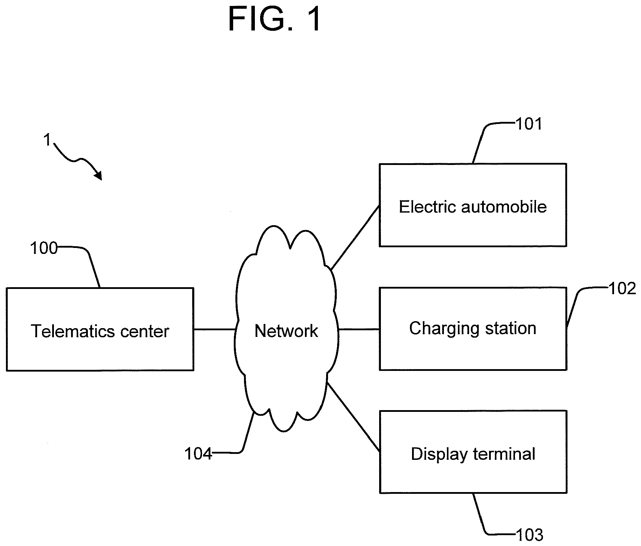

In Fig. 1, a configuration example of a route search system for electric automobiles according to an embodiment is shown. The route search system 1 for an electric automobile include a telematics center 100, a plurality of electric automobiles 101, a plurality of charging stations 102, and a plurality of display terminals 103. These components 100 to 103 are coupled by a network 104 that can perform data communication bi-directionally. The network 104 includes, for example, a cellular phone network, the Internet, or both the networks.

The telematics center 100 collects information from the electric automobiles 101, the charging stations 102, the display terminals 103, and the like and executes various kinds of processing. The telematics center 100 transmits information such as a processing result to the electric automobile 101, the charging stations 102, and/or the display terminals 103.

The electric automobile 101 is an automobile that travels with electricity accumulated in a battery.

The charging station 102 is an apparatus that charges the battery of the electric automobile 101. The charging station 102 is set on a roadside like the existing gas station. Alternatively, if the electric automobile 101 can be charged in one's own home or the like, the home or the like may be regarded as the charging station 102.

The display terminal 103 is a terminal having a function of displaying, on a screen, a roadmap, locations of charging stations, a route search result, and the like. The display terminal 103 is, for example, a cellular phone, a tablet terminal, a personal computer (PC), or a portable or vehicle-mounted car navigation apparatus.

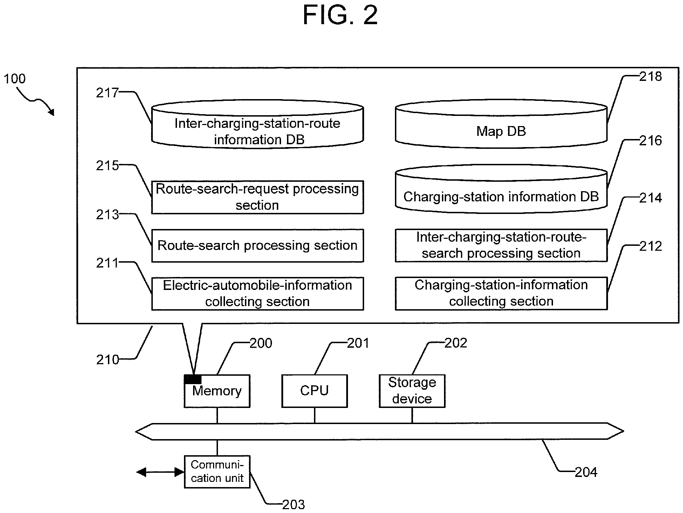

In Fig. 2, an example of an internal configuration of the telematics center 100 is shown. The telematics center 100 includes a memory 200, a central processing unit (CPU) 201, a storage device 202, and a communication unit 203. These components 200 to 203 are coupled by an internal communication line 204 (e.g., a bus) that can perform data communication bi-directionally.

The CPU 201 reads out a predetermined computer program (hereinafter referred to as "program") and data from the storage device 202, expands the program and the data in the memory 200, and executes the program and the data. The CPU 201 reads out, for example, a route search program 210 from the storage device 202, expands the route search program 210 in the memory 200, and executes the route search program 210. The route search program 210 includes a plurality of programs of an electric-automobile-information collecting section 211, a charging-station-information collecting section 212, a route-search processing section 213, an inter-charging-station-route-search processing section 214, a route-search-request processing section 215, and the like.

The CPU 201 reads out, for example, predetermined data retained by a charging-station information DB 216, an inter-charging-station-route information DB 217, and a map DB 218 from the storage device 202 as appropriate, expands the data in the memory 200, and uses the data. Consequently, the telematics center 100 realizes various functions explained below.

The storage device 202 is, for example, a hard disk drive, a flash memory, or a semiconductor memory. The communication unit 203 controls transmission and reception of data transmitted and received via the network 104.

The telematics center 100 passes the data received from the electric automobile 101 via the communication unit 203 to the electric-automobile-information collecting section 211, passes data received from the charging station 102 to the charging-station-information collecting section 212, and passes data received from the display terminal 103 to the route-search-request processing section 215.

The electric-automobile-information collecting section 211 collects information such as the present location and a state of charge from the electric automobile 101 according to a request from the display terminal 103.

The charging-station-information collecting section 212 collects information concerning a state of use and a scheduled state of use of charging equipment from the plurality of charging stations 102 according to a request from the display terminal 103. The state of use or the scheduled state of use of the charging equipment is information concerning full or vacancy concerning charging. The full concerning charging indicates a state in which all kinds of charging equipment of a certain charging station are used or reserved in a certain period of time. The vacancy concerning charging indicates a state in which there is vacancy in charging equipment of a certain charging station. The information concerning full or vacancy concerning charging is hereinafter sometimes referred to as full/vacancy information.

The route-search processing section 213 searches for a route from a designated departure place to a designated destination according to a request from the inter-charging-station-route-search processing section 214 or the route-search-request processing section 215. Specifically, the route-search processing section 213 searches for a route on which a moving time by the electric automobile 101 from the departure place to the destination is the shortest (hereinafter referred to as "shortest route"). The shortest route can be searched for by using the Dijkstra's algorithm, which is one of general route search algorithms. The route-search processing section 213 derives a traveling distance, a traveling time, and electric energy necessary for traveling (hereinafter referred to as "necessary electric energy") on the searched route. Further, the route-search processing section 213 derives a group of points of latitudes and longitudes for displaying the searched route on a map.

The inter-charging-station-route-search processing section 214 searches for a route between the charging stations 102. Specifically, the inter-charging-station-route-search processing section 214 searches for a route of a forward path and a backward path from a certain charging station 102 to another certain charging station 102. The route may be searched for using the route-search processing section 213 with the certain station 102 set as a departure place and the other certain charging station 102 set as a destination. The inter-charging-station-route-search processing section 214 registers a traveling distance, a traveling time, necessary electric energy, and the like between the charging stations 102 derived as a result of the route search in the inter-charging-station-route information DB 217.

The route-search-request processing section 215 searches for, according to a request from the display terminal 103, a route on which the electric automobile 101 can reach a destination from a departure place with the present state of charge without causing a dead battery and transmits a result of the search to the display terminal 103. Specifically, first, the route-search-request processing section 215 executes the charging-station-information collecting section 212 and the electric-automobile-information collecting section 211. The route-search-request processing section 215 searches for, using charging station information acquired from the charging-station-information collecting section 212, vehicle information acquired from the electric-automobile-information collecting section 211, and route information extracted from the inter-charging-station-route information DB 217, a route on which the electric automobile 101 can reach the destination from the departure place with the present state of charge without causing a dead battery. The route-search-request processing section 215 transmits a route search result and map information obtained from the map database (DB) 218 to the display terminal 103 via the communication unit 203 and the network 104.

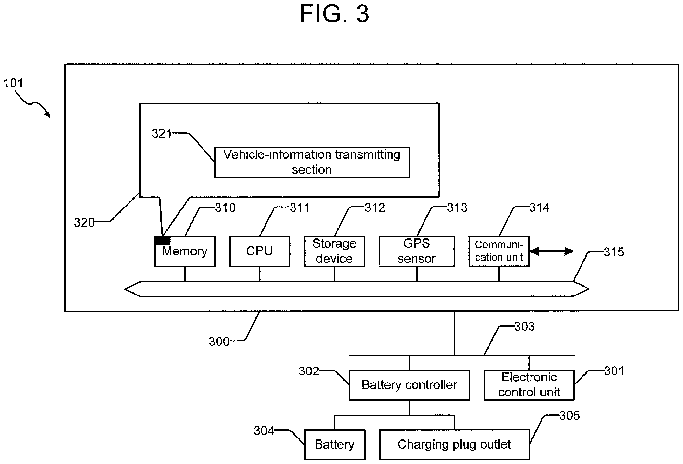

In Fig. 3, an example of an internal configuration of the electric automobile 101 is shown. The electric automobile 101 includes a vehicle-mounted machine 300, an electronic control unit 301, and a battery controller 302. These components 300 to 302 are coupled by a vehicle network 303 that can transmit and receive control information bi-directionally. The vehicle network 303 is, for example, a controller area network (CAN).

The electronic control unit 301 is a device that comprehensively performs electrical control of a vehicle. The battery controller 302 is a type of the electronic control unit 301. A battery 304 for charging and a charging plug outlet 305 for inserting a plug of the charging station 102 are coupled to the battery controller 302. Specifically, in the charging station 102, the battery 304 can be charged by inserting the plug into the charging plug outlet 305. In the electric automobile 101, a capacitor may be mounted instead of the battery 304 or together with the battery 304. As the capacitor, for example, a lithium ion capacitor may be used. The electronic control unit 301 and the battery controller 302 transmit and receive control information each other via the vehicle network 303.

The vehicle-mounted machine 300 includes a memory 310, a CPU 311, a storage device 312, a GPS sensor 313, and a communication unit 314. These components 310 to 314 are coupled by an internal communication line 315 (e.g., a bus) that can perform data communication bi-directionally.

The CPU 311 reads out a predetermined program and data from the storage device 312, expands the program and the data in the memory 310, and executes the program and the data. The CPU 311 reads out, for example, a vehicle-information control program 320 from the storage device 312 as appropriate, expands the vehicle-information control program 320 in the memory 310, and executes the vehicle-information control program 320. The vehicle-information control program 320 includes, for example, a program of a vehicle-information transmitting section 321. Consequently, the vehicle-mounted machine 300 realizes various functions explained below. The storage device 312 is, for example, a hard disk drive, a flash memory, or a semiconductor memory. The communication unit 314 controls transmission and reception of data transmitted and received via the network 104.

The vehicle-information transmitting section 321 returns location information, state of charge information, and driving range per 1 kWh (Electric Mileage) information of the vehicle according to a request from the telematics center 100. Specifically, the vehicle-information transmitting section 321 acquires location information from the GPS sensor 313 and acquires state of charge information from the battery controller 302. Further, the vehicle-information transmitting section 321 acquires driving range (Electric Mileage) information per 1 kWh of a user of the electric automobile 101 from the electronic control unit 301. The vehicle-information transmitting section 321 transmits the acquired location information, state of charge information, and driving range information to the telematics center 100 via the network 104.

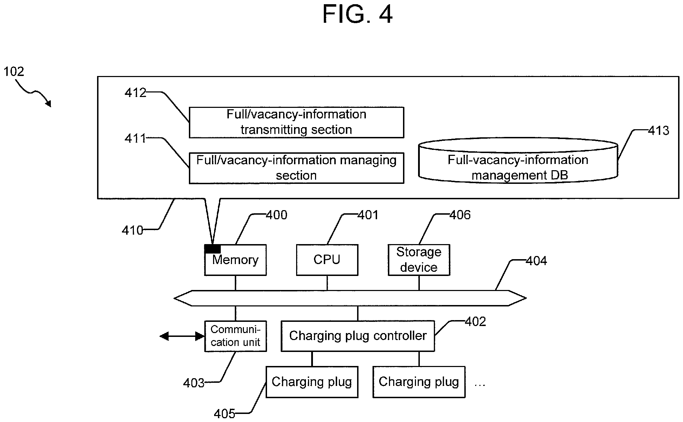

In Fig. 4, an example of an internal configuration of the charging station 102 is shown. The charging station 102 includes a memory 400, a CPU 401, a storage device 406, a charging plug controller 402, and a communication unit 403. These components 400 to 403 and 406 are coupled by an internal communication line 404 (e.g., a bus) that can perform data communication bi-directionally.

A charging plug 405 is coupled to the charging plug controller 402. When the charging station 102 includes a plurality of plug types or when the charging station 102 includes a plurality of plugs of the same type, a plurality of charging plugs 405 are coupled to the charging plug controller 402. The charging plug controller 402 controls the charging plugs 405.

The CPU 401 reads out a predetermined program and data from the storage device 406, expands the program and the data in the memory 400, and executes the program and the data. The CPU 401 reads out, for example, a charging-station-information control program 410 from the storage device 406 as appropriate, expands the charging-station-information control program 410 in the memory 400, and executes the charging-station-information control program 410. The charging-station-information control program 410 includes, for example, programs of a full/vacancy-information managing section 411 and a full/vacancy-information transmitting section 412. The CPU 401 reads out, for example, predetermined data retained by a full/vacancy-information management DB 413 from the storage device 406 as appropriate, expands the data in the memory 400, and uses the data. Consequently, the charging station 102 realizes various functions explained below. The storage device 406 is, for example, a hard disk drive, a flash memory, or a semiconductor memory. The communication unit 403 controls transmission and reception of data transmitted and received via the network 104.

The charging station 102 passes data received from the telematics center 100 via the communication unit 403 to the full/vacancy-information transmitting section 412.

The full/vacancy-information managing section 411 manages a charging scheduled time, which is a schedule indicating when the electric automobiles 101 use the charging station, and stores information concerning the charging scheduled time in the full/vacancy-information management DB 413.

The charging station 102 may use a use scheduling function. For example, an input device such as a touch panel may be provided in the charging station 102 to make it possible to reserve a charging time on a screen. Alternatively, a charging time may be able to be reserved in a desired charging station 102 from the display terminal 103 via the network 104.

The full/vacancy-information transmitting section 412 transmits an identifier that can uniquely identify a charging station (hereinafter referred to as "CSID (Charge Station Identifier)") and full/vacancy information to the telematics center 100 according to a request of the telematics center 100. The full/vacancy information includes information concerning, for example, at which time charging is already reserved or at which time charging can be reserved.

Specifically, the full/vacancy-information transmitting section 412 executes processing explained below. Upon receiving a request from the telematics center 100, the full/vacancy-information transmitting section 412 acquires a CSID and full/vacancy information from the full/vacancy-information management DB 413. The full/vacancy-information transmitting section 412 transmits the acquired CSID and full/vacancy information to the telematics center 100 via the network 104. When the charging station 102 includes the plurality of charging plugs 405, peculiar CSIDs are respectively allocated to the charging plugs 405.

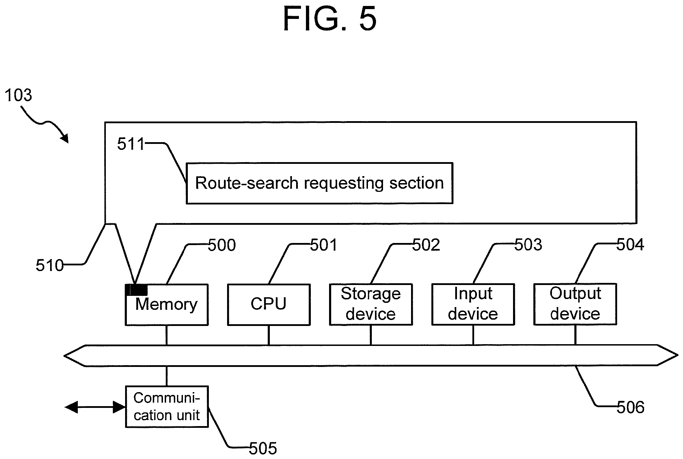

In Fig. 5, an example of an internal configuration of the display terminal 103 is shown. The display terminal 103 includes a memory 500, a CPU 501, a storage device 502, an input device 503, an output device 504, and a communication unit 505. These components 500 to 505 are coupled by an internal communication line 506 (e.g., a bus) that can perform data communication bi-directionally.

The CPU 501 reads out a predetermined program and data from the storage device 502, expands the program and the data in the memory 500, and executes the program and the data. The CPU 501 reads out, for example, a route-search-result display program 510 from the storage device 502, expands the route-search-result display program 510 in the memory 500, and executes the route-search-result display program 510. The route-search-result display program 510 includes, for example, a program of a route-search requesting section 511.

The storage device 502 is, for example, a hard disk drive, a flash memory, or a semiconductor memory. The communication unit 505 controls transmission and reception of data transmitted and received via the network 104. The input device 503 includes, for example, a keyboard, a mouse, a touch panel, or a sound recognition device. The output device 504 may include, for example, a liquid crystal display, a head-mounted display, a sound synthesizing device, a speaker, or a printer. The input device 503 and the output device 504 may be an integrated device (e.g., a display with touch panel function).

The display terminal 103 passes data received from the telematics center 100 via the communication unit 505 to the route-search requesting section 511.

The route-search requesting section 511 requests the telematics center 100 to search for a route on the basis of information such as a departure place and a destination input from the input device 503. At this point, the route-search requesting section 511 requests a search for a route on which the electric automobile 101 does not cause a dead battery while traveling (i.e., a route on which the electric automobile 101 passes through the charging stations 102 according to necessity). The route-search requesting section 511 outputs a route search result, map information, and the like received from the telematics center 100 to the output device 504.

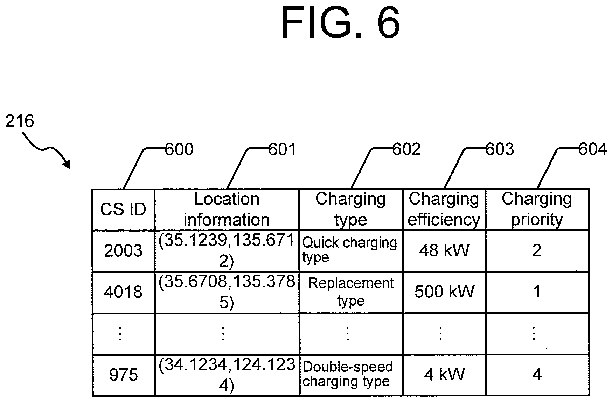

In Fig. 6, a data configuration example of the charging-station information DB 216 is shown. The charging-station information DB 216 includes, as data items, a CSID 600, location information 601, a charging type 602, charging efficiency 603, and charging priority 604.

As explained above, the CSID 600 is an identifier for uniquely identifying the charging plug 405 of the charging station 102.

The location information 601 is information indicating the location (the latitude and the longitude) of the charging station 102.

The charging type 602 indicates a type of a method of charging in the charging station 102. As the charging type 602, there are, for example, normal charging, double-speed charging, medium-speed charging, quick charging, and replacement types. Charging speed is different depending on a charging type. For example, when the same electricity is charged in a battery, whereas the normal charging requires eight hours, the quick charging requires only thirty minutes. The replacement type is a method of replacing a battery itself. Therefore, in terms of the charging speed, in general, the replacement type is the fastest.

The charging efficiency 603 indicates the charging efficiency of the charging station 102. A larger value of the charging efficiency 603 indicates that the charging speed is higher (i.e., time required for charging is shorter).

The charging priority 604 indicates the charging priority of the charging station 102. The charging priority 604 is set on the basis of the charging type 602 and/or the charging efficiency 603. In other words, relatively high charging priority 604 is set for the charging station 102 having high charging efficiency. For example, as shown in Fig. 6, the charging priority of the "replacement type" having the highest charging efficiency is set as "1", the charging priority of the "quick charging type" having the second highest charging efficiency is set as "2", and the charging priority of the "double-speed charging type" having not very high charging efficiency is set as "4".

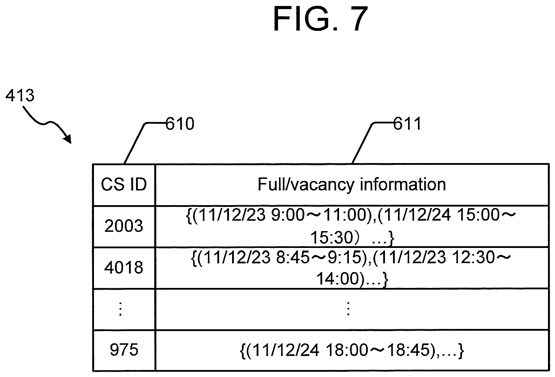

In Fig. 7, a data configuration example of the full/vacancy-information management DB 413 is shown. The full/vacancy-information management DB 413 includes, as data items, the CSID 610 and full/vacancy information 611. The CSID 610 has the same configuration as the CSID 600 explained above. The full/vacancy information 611 retains information indicating at which time the charging plug 405 of the charging station 102 indicated by the CSID 610 is already reserved or at which time the charging plug 405 can be reserved. The full/vacancy information 611 shown in Fig. 7 retains information concerning reserved date and time. In other words, charging can be reserved at date and time other than the reserved date and time. The full/vacancy information 611 may include only information after the present time.

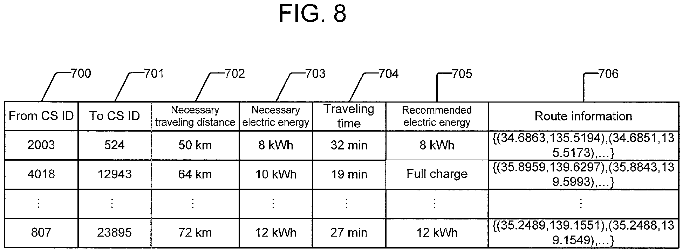

In Fig. 8, a data configuration example of the charging-station information DB 216 managed by the telematics center 100 is shown.

The charging-station information DB 216 includes, as data items, a From CSID 700, a To CSID 701, a necessary traveling distance 702, necessary electric energy 703, a traveling time 704, recommended electric energy 705, and route information 706.

The From CSID 700 indicates a CSID of the charging station 102 in a departure place. The To CSID 701 indicates a CSID of the charging station 102 of the destination.

The necessary traveling distance 702 indicates a traveling distance necessary for reaching the charging station 102 indicated by the To CSID 701 from the charging station 102 indicated by the From CSID 700.

The necessary electric energy 703 indicates electric energy necessary for reaching the charging station 102 indicated by the To CSID 701 from the charging station 102 indicated by the From CSID 700.

The traveling time 704 indicates time required for reaching the charging station 102 indicated by the To CSID 701 from the charging station 102 indicated by the From CSID 700.

The recommended electric energy 705 indicates electric energy recommended to be charged in the battery at the time of departure from the charging station 102 indicated by the From CSID 700.

The route information 706 is information indicating a route for reaching the charging station 102 indicated by the To CSID 701 from the charging station 102 indicated by the From CSID 700. The route information 706 includes a group of points indicating latitudes and longitudes. A route is indicated by connecting these points in order.

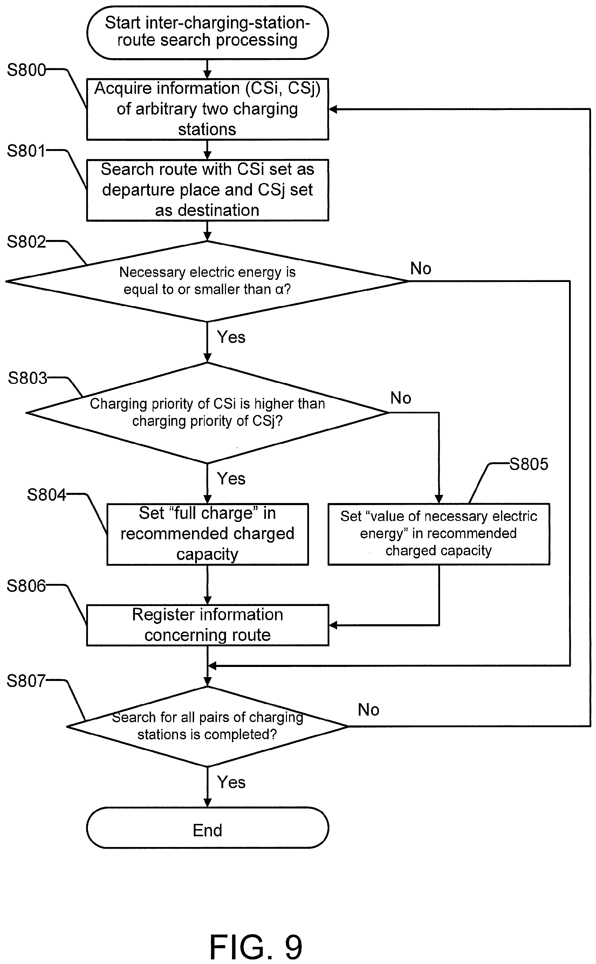

In Fig. 9, a flowchart of the inter-charging-station-route-search processing section 214 included in the telematics center 100 is shown. The inter-charging-station-route-search processing section 214 executes processing shown in Fig. 9 and generates information of the charging-station information DB 216 shown in Fig. 8. The processing is executed periodically or when a predetermined condition occurs. The predetermined condition is, for example, time when the information of the charging-station information DB 216 is updated (i.e., time when the charging stations 102 increase or decrease).

The inter-charging-station-route-search processing section 214 acquires information concerning two arbitrary charging stations from the charging-station information DB 216 (S800). The pieces of information concerning the two charging stations are respectively represented as CSi and CSj.

The inter-charging-station-route-search processing section 214 sets the location information 601 of one charging station CSi as a departure place, sets the location information 601 of the other CSj as a destination, and searches for a route (S801).

The inter-charging-station-route-search processing section 214 checks whether the necessary electric energy 703 obtained as a result of the route search is equal to or smaller than a predetermined value α (S802). A value of α may be set from, for example, a battery capacity (e.g., 24 kWh) of a certain electric automobile. The predetermined value α is used to exclude movement between charging stations too far apart from each other from targets of this processing. Therefore, for example, the predetermined value α is set with reference to a normal battery capacity of a normal electric automobile. The predetermined value α is not limited to one predetermined value. A plurality of predetermined values α can be provided. Consequently, it is possible to cope with, for example, a route search for an electric automobile for short distance movement and a route search for an electric automobile capable of moving between cities. When the necessary electric energy 703 is equal to or smaller than the predetermined value α (YES in S802), the inter-charging-station-route-search processing section 214 compares the charging priority 604 of the charging station CSi and the charging priority 604 of the charging station CSj (S803). This is because, in this case, the electric automobile 101 is likely to move from the charging station CSi to the charging station CSj. On the other hand, when the necessary electric energy 703 is larger than α (NO in S802), the inter-charging-station-route-search processing section 214 proceeds to processing in step S807. This is because it is less likely that the electric automobile 101 moves consuming electric power larger than the predetermined value α. When even such a route on which the electric automobile 101 is less likely to move is set as a calculation target, a load of this processing increases. Therefore, only a route on which electric power equal to or smaller than the predetermined value α is used for movement is set as a calculation target of this processing.

When the charging priority 604 of the charging station CSi is higher than the charging priority 604 of the charging station CSj (i.e., the charging station CSi has higher charging efficiency) (YES in step S803), the inter-charging-station-route-search processing section 214 sets "full charge" in the recommended electric energy 705 in the charging station CSi (S804). The inter-charging-station-route-search processing section 214 proceeds to processing in step S806. This is because, if the electric automobile 101 is charged as much as possible in charging stations having high charging efficiency, charging times in charging stations having low charging efficiency can be reduced and, as a result, a total of the charging times and a traveling time (i.e., time required for movement) can be reduced.

On the other hand, when the charging priority 604 of the charging station CSi is lower than the charging priority 604 of the charging station CSj (i.e., the charging station CSj has higher charging efficiency) (NO in S803), the inter-charging-station-route-search processing section 214 sets "a value of necessary electric energy" in the recommended electric energy 705 in the charging station CSi (S805). The inter-charging-station-route-search processing section 214 proceeds to the processing in step S806. In a charging station having low charging efficiency, the electric automobile 101 cannot be charged much even if time is consumed. Therefore, only a necessary minimum amount is charged.

In step S806, the inter-charging-station-route-search processing section 214 registers, in the charging-station information DB 216, information concerning a route from the charging station CSi in the departure place and the charging station CSj in the destination. The information concerning the route includes the necessary traveling distance 702, the necessary electric energy 703, the traveling time 704, the recommended electric energy 705, and the route information 706 from the charging station CSi to the charging station CSj (S806).

After step S806 ends or when it is determined in step S802 that the necessary electric energy is larger than α (NO in S802), the inter-charging-station-route-search processing section 214 determines whether the route search is completed for all pairs of the charging stations 102 (S807). The pair in step S807 is a combination of different two charging stations. This is because a departure place and a destination should be different.

When the route search for all the pairs of the charging stations 102 is completed (YES in S807), the inter-charging-station-route-search processing section 214 ends the processing.

When the route search for all the pairs of the charging stations 102 is not completed (NO in S807), the inter-charging-station-route-search processing section 214 returns to step S800 and executes a route search for another pair of the charging stations 102. Even the same pair of the charging stations 102 is treated as another pair if a departure place and a destination are interchanged. This is because, in a forward path and a backward path, it is likely that traffic situations or the like are different and traveling times are different. Charging station information may be created for each of periods of time such as morning, daytime, evening, and night. This is because a traffic situation or the like is different depending on a period of time. Further, charging station information may be created taking into account weekdays and holidays.

In setting the value of the necessary electric energy in step S805 and in registering the information concerning the route in step S806, the inter-charging-station-route-search processing section 214 may take into account not only the route search result in step S801 but also probe data obtained from the other electric automobiles 101. For example, when another electric automobile 101 actually reached the charging station CSj from the charging station CSi with certain fixed power consumption in the past, the inter-charging-station-route-search processing section 214 may estimate information concerning a route on the basis of a state of use of an air conditioner, a value of Electric Mileage, and the like of the electric automobile 101. In other words, the inter-charging-station-route-search processing section 214 can estimate the necessary traveling distance 702, the necessary electric energy 703, the traveling time 704, the recommended electric energy 705, and/or the route information 706 of the electric automobile 101 that is a target of the present route search.

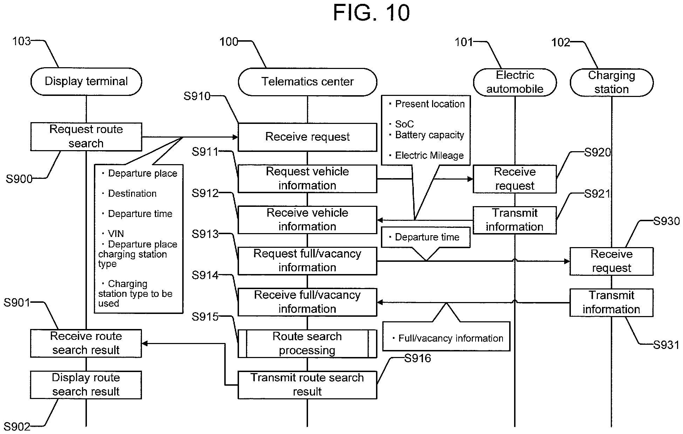

In Fig. 10, a flowchart of route search processing in the route search system 1 is shown. The user inputs information concerning a vehicle identifier (hereinafter referred to as "VIN (Vehicle Identification Number)") of the electric automobile 101, departure scheduled time, a departure place charging station, charging stations to be used, and a departure place and a destination to the display terminal 103 via the input device 503 and instructs the display terminal 103 to perform a route search. The user may designate all of those kinds of input information manually or by sound or at least a part of the input information may be automatically designated in advance. For example, as the VIN, a value stored beforehand may be read out and used. As the departure scheduled time, the present time may be directly used or a value obtained by adding a predetermined time to the present time may be used.

The display device 103 receives the instruction from the user, transmits the input information to the telematics center 100, and requests the telematics center 100 to perform a route search (S900). The departure place charging station has information concerning the charging station 102 in the departure place. For example, when the departure place is the user's home, the departure place charging station is charging equipment of the home. When a site of a facility including a charging station is a departure place like, for example, a supermarket or a public facility including a charging station, the departure place charging station is a charging station in the facility. The charging stations to be used have information concerning charging types, the use of which is permitted by the user. For example, when the user permits the use of only the charging types; the "replacement type", the "quick charging type", and the "medium speed charging type", only charging stations including the charging types are charging stations that the electric automobile 101 passes through.

The telematics center 100 receives the route search request from the display terminal 103 (S910). The telematics center 100 requests the electric automobile 101 corresponding to the VIN to transmit vehicle information such as the present location, a state of charge, and/or electric mileage (S911).

The electric automobile 101 receives the vehicle information request from the telematics center 100 (S920). The electric automobile 101 acquires information concerning the present state of charge and the present battery capacity from the battery controller 302 and transmits the information to the telematics center 100 as vehicle information (S921). The electric automobile 101 may transmit the present location, the present electric mileage, and the like to the telematics center 100 as vehicle information according to necessity.

The telematics center 100 receives the vehicle information from the electric automobile 101 (S912). The telematics center 100 requests all the charging stations 102 to transmit full/vacancy information from the departure scheduled time acquired in step S910 to time β hours after the departure scheduled time (S913). For example, when twenty-four hours is set as the β hours, the telematics center 100 requests full/vacancy information for twenty-four hours from the departure scheduled time.

The charging station 102 receives the request for full/vacancy information from the telematics center 100 (S930). The charging station 102 extracts, from the full/vacancy-information management DB 413, full/vacancy information from the departure scheduled time to the time β hours after the departure scheduled time and transmits the full/vacancy information to the telematics center 100 (S931).

The telematics center 100 receives the full/vacancy information from the charging station 102 (S914). The telematics center 100 searches for, using the vehicle information and the full/vacancy information, an optimum route on which the electric automobile 101 passes through the charging station 102 (S915). Details of processing in step S915 are explained below. The telematics center 100 transmits a route search result obtained in step S915 to the display terminal 103 together with map information or the like including the departure place, the charging stations 102 that the electric automobile 101 passes through, and the vicinity of the destination (S916).

The display terminal 103 receives the route search result from the telematics center 100 (S901). The display terminal 103 outputs the route search result to the output device 504 together with a map (S902).

The VIN may be information other than VIN as long as a vehicle can be uniquely identified. For example, when the telematics center 100 includes a user management DB that manages a correspondence relation between user identifiers and VINs, the display terminal 103 may transmit a user identifier instead of the VIN in step S900.

The departure place charging station may be automatically specified. For example, when the electric automobile 101 is being charged or being coupled to a charging plug, the electric automobile 101 may specify a charging type of the charging station from the battery controller 302 and automatically transmit information concerning the charging type to the display terminal 103.

The charging stations to be used may be automatically set. For example, when charging types usable by the electric automobile 101 are determined, the electric automobile 101 may automatically transmit the usable charging types to the display terminal 103.

As the departure scheduled time, for example, the present time may be automatically set by the display terminal 103.

As the departure place, the present location of the electric automobile 101 may be automatically set. Specifically, the display terminal 103 acquires location information from the electric automobile 101 and sets the location information as a departure place.

The departure place may be the present location of the user who owns the display terminal 103. Specifically, the display terminal 103 is mounted with a GPS sensor. The display terminal 103 sets location information obtained from the GPS sensor as the departure place.

The route search request (S900) of the display terminal 103 may be automatically executed at a predetermined interval rather than being manually executed by the user. Specifically, a system for updating a shortest route from the present location to the destination at any time may be adopted.

In the acquisition of vehicle information (S911 and S912), the telematics center 100 may cause the display terminal 103 to transmit the vehicle information rather than acquiring the vehicle information from the electric automobile 101.

The telematics center 100 may narrow down, according to a predetermined condition, charging stations from which full/vacancy information is collected (S913 and S914). For example, the telematics center 100 specifies, on the basis of the distance from the departure place to the destination and a driving range of the electric automobile 101 derived from a state of charge and Electric Mileage, the charging station 102 located in a range that the electric automobile 101 can reach. The telematics center 100 may acquire full/vacancy information from only the specified charging station 102. Timing when the telematics center 100 inquires the charging station 102 about the full/vacancy information may be time other than the route search request time. For example, the telematics center 100 may periodically collect the full/vacancy information from the charging stations 102. In this case, for example, the telematics center 100 retains the collected full/vacancy information of the charging stations 102 as a DB.

In the case of a system that does not use full/vacancy information, the telematics center 100 does not have to collect full/vacancy information (S913 and S914). In this case, a waiting time of the charging stations 102 in the route search processing (S915) is regarded as "0".

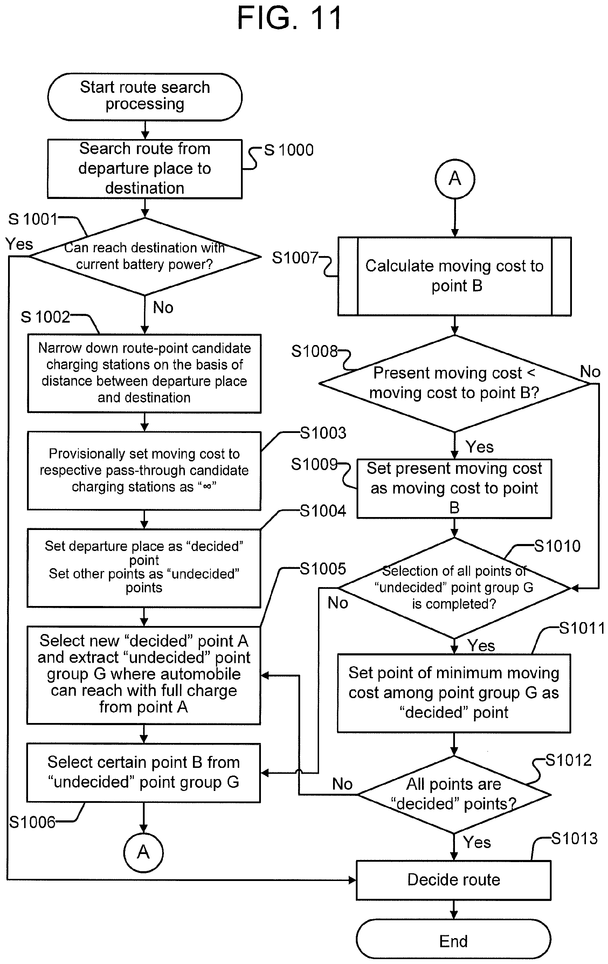

In Fig. 11, a flowchart of the route search processing in the telematics center 100 is shown. In the flowchart of Fig. 11, the processing in step S915 in Fig. 10 is explained in detail.

The route-search processing section 213 searches for a route from the departure place to the destination set in step S910 (S1000).

The route-search processing section 213 determines whether the electric automobile 101 can reach the destination from the departure place without being charged at all when the electric automobile 101 travels, with the present state of charge, on the route searched in step S1000 (S1001).

When the electric automobile 101 can reach the destination from the departure place without being charged at all (YES in S1001), the route-search processing section 213 derives the searched route as a formal route (S1013) and ends the processing. This is because, in this case, it is unnecessary to charge the electric automobile 101 halfway and a further route search is unnecessary.

When the electric automobile 101 cannot reach the destination from the departure place without being charged at all (NO in S1001), the route-search processing section 213 narrows down, on the basis of the distance between the departure place and the destination, the charging stations 102 that the electric automobile 101 can pass through in general (hereinafter referred to as "pass-through candidate charging stations") (S1002). This is for the purpose of searching for an efficient route comprehensively taking into account a charging time and a traveling time. At this point, only the charging stations 102 matching the charging stations to be used set in step S910 may be set as target charging stations to be narrowed down.

The route-search processing section 213 sets "0" in moving cost at a departure point and provisionally sets "∞" in moving cost at points other than the departure point (S1003). The moving cost is, for example, a value calculated on the basis of time required to reach a certain point from the departure point. For example, when the electric automobile 101 stops in a charging station before reaching a certain point, the moving cost includes, for example, a waiting time until charging is started in the charging station and time required for charging in the charging station.

The route-search processing section 213 sets a status of the departure point as a "decided" point and sets statuses of the other points as "undecided" points (S1004).

The route-search processing section 213 selects a new "decided point" A. The new "decided" point means a "decided" point which is set as "decided" point in last step S1011. If it is the first time to execute step 1005, the new "decided" point should be the departure point. The route-search processing section 213 extracts, from the "decided point" A, an "undecided" point group G that the electric automobile 101 can reach in a battery full-charge state (S1005). The route-search processing section 213 determines whether the electric automobile 101 can reach the "undecided" point group G with full charge, for example, as explained below.

(a) When the point A is a departure place, the route-search processing section 213 executes a route search on all pass-through candidate charging stations. (b) When the point A is a charging station, the route-search processing section 213 regards a CSID of the charging station 102 at the point A as the departure place charging station 700 and searches for a charging station 701 (or a destination), the necessary electric energy 703 of which is smaller than a state of charge of the electric automobile 101 (i.e., that the electric automobile 101 can reach with the state of chare (SoC)), referring to the inter-charging-station-route information DB 217.

The route-search processing section 213 selects certain one point B from the "undecided" point group G (S1006).

The route-search processing section 213 calculates moving cost at the point B (S1007). Details of processing for calculating moving cost are explained below.

The route-search processing section 213 compares the present moving cost at the point B calculated in step S1007 and moving cost at the point B in the past. When the calculated present moving cost is smaller than the moving cost in the past (YES in S1008), the route-search processing section 213 sets the present moving cost as moving cost at the point B anew (S1009). The route-search processing section 213 proceeds to processing in step S1010.

When the calculated present moving cost is equal to or larger than the moving cost in the past (NO in S1008), the route-search processing section 213 proceeds to the processing in step S1010.

In step S1010, the route-search processing section 213 determines whether the selection in step S1006 is completed for all points of the "undecided" point group G (S1010).

When a point of the "undecided" point group G not selected yet is present (NO in S1010), the route-search processing section 213 returns to step S1006 and executes the processing in step S1006 and subsequent steps on the point of the "undecided" point group G not selected yet.

When all the points of the "undecided" point group G are selected (YES in S1010), the route-search processing section 213 specifies, among the point group G, a point of minimum moving cost and sets the point as a "decided" point (S1011).

The route-search processing section 213 determines whether all the points are set as "decided" points (S1012).

When an "undecided" point is still present (NO in S1012), the route-search processing section 213 returns to step S1005 and executes the processing in step S1005 and subsequent steps on the point set as the "decided" point anew in step S1011.

When all the points are the "decided" points (YES in S1012), the route-search processing section 213 decides a route with minimum cost from a departure place to a destination as a search result (S1013). The moving cost includes a charging time and the like in the charging station 102. The route-search processing section 213 may concurrently generate, in the route of the search result, information such as a traveling time and a traveling distance to the destination, charging times in charging stations that the electric automobile 101 passes through, and states of charge (SoCs) at points that the electric automobile 101 passes through.

In step S1002, the route-search processing section 213 may narrow down the charging stations 102 taking into account other information as well. The route-search processing section 213 may take into account, for example, a driving range of the electric automobile 101 or gradient information that could be included in the map DB 218.

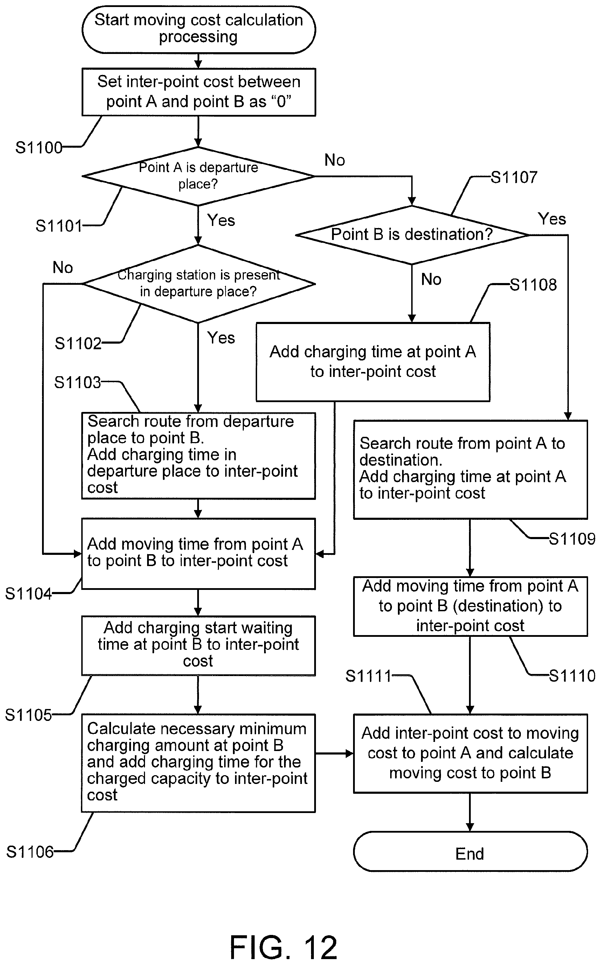

In Fig. 12, a flowchart of moving cost calculation processing is shown. In the flowchart of Fig. 12, the processing in step S1007 in Fig. 11 is explained in detail.

The route-search processing section 213 sets inter-point cost between the point A and the point B to "0" (S1100). In other words, the route-search processing section 213 initializes the inter-point cost between the point A and the point B. A unit of the inter-point cost is, for example, hour.

The route-search processing section 213 determines whether the point A is a departure place (S1101). First, when the point A is the departure place (YES in S1101), processing explained below is performed.

The route-search processing section 213 checks whether a usable charging station is present in the departure place (S1102). For the check, the route-search processing section 213 uses, for example, the information acquired in step S900.

When the usable charging station 102 is present in the departure place (YES in S1102), the route-search processing section 213 executes processing same as the inter-charging-station route search processing (S801 to S806) and derives a route search result from the departure place to the point B (a pass-through candidate charging station). The route search result includes the recommended electric energy 705. The route-search processing section 213 calculates time required for charging the electric automobile 101 to the recommended electric energy 705. The route-search processing section 213 calculates the charging time using, the route search result, vehicle information (a state of charge and a battery capacity) acquired from the electric automobile 101, and the charging efficiency 603 of the charging station 102 in the departure place acquired from the display terminal 103. The route-search processing section 213 adds the calculated charging time in the departure place to the inter-point cost (S1103) and proceeds to processing in step S1104.

When the usable charging station 102 is absent in the departure place (NO in S1102), the route-search processing section 213 does not need to take into account a charging time in the departure place. Therefore, the route-search processing section 213 proceeds to processing in step S1104.

In step S1104, the route-search processing section 213 adds a moving time from the departure place (the point A) to the point B to the inter-point cost (S1104).

The route-search processing section 213 calculates arrival estimated time at the point B from the departure time, the moving cost from the departure place to the point A, and the inter-point cost from the point A to the point B. The route-search processing section 213 calculates a waiting time until the start of charging at the arrival estimated time on the basis of the full/vacancy information acquired from the charging station 102 and adds the waiting time to the inter-point cost (S1105).

The route-search processing section 213 calculates a necessary minimum charged capacity (electric energy) at the point B, stores the charged capacity as a departure time charged capacity at the point B, and then adds time required for charging the electric automobile 101 to the charged capacity to the inter-point cost (S1106). The necessary minimum charged capacity means a charged capacity necessary for the electric automobile 101 to reach a point where the recommended electric energy 705 is the minimum among "undecided" points that the electric automobile 101 can reach from the point B with "full charge". The recommended electric energy 705 at the "undecided" points is known by referring to the inter-charging-station-route information DB 217. At a point when the electric automobile 101 reaches the point B, when a calculated charged capacity of the electric automobile 101 exceeds the necessary minimum charged capacity, the route-search processing section 213 stores the charged capacity as a departure time charged capacity at the point B and then sets a charging time to "0". In other words, in step S1106, the route-search processing section 213 does not adds the charging time to the inter-point cost. The route-search processing section 213 adds the inter-point cost to the moving cost at the point A, sets the moving cost added with the inter-point cost as the present moving cost at the point B (S1111), and ends the processing. In other words, the route-search processing section 213 proceeds to the processing in step S1008 in Fig. 11. The route-search processing section 213 may determine the necessary minimum charged capacity at the point B using full charge or a charged capacity necessary for the electric automobile 101 to reach a point where the recommended electric energy 705 is the maximum among the "undecided" points that the electric automobile 101 can reach from the point B with "full charge".

Processing performed when the point A is not a departure place (NO in S1101) is explained below.

The route-search processing section 213 determines whether the point B is a destination (S1107). When the point B is not a destination (NO in S1107), since it is seen that both the point A and the point B are the charging stations 102, the route-search processing section 213 performs processing explained below. The route-search processing section 213 calculates time required for charging the electric automobile 101 to the recommended electric energy 705 at the point A (the charging station) and adds the time to the inter-point cost (S1108). The route-search processing section 213 calculates the charging time on the basis of the battery capacity of the electric automobile 101, the charging efficiency 603 at the point A, and the departure time charged capacity at the point A stored in S1106 or the like. The route-search processing section 213 proceeds to the processing in step S1104.

On the other hand, when the point B is a destination (YES in S1107), the route-search processing section 213 performs processing explained below. The route-search processing section 213 derives a route search result from the point A to the destination. As explained above, the route search result includes the recommended electric energy 705. The route-search processing section 213 calculates, according to processing same as step S1108, time required for charging the electric automobile 101 to the recommended electric energy 705 at the point A. The route-search processing section 213 adds the charging time to the inter-point cost (S1109).

The route-search processing section 213 adds a moving time from the point A to the point B (the destination) to the inter-point cost (S1110). The route-search processing section 213 proceeds to the processing in step S1111 and ends the moving costs calculation processing.

When a charging station in the departure place is registered in the charging-station information DB 216 in step S1103, the route-search processing section 213 may acquire route search information referring to the inter-charging-station-route information DB 217. For example, when an error between the location information 601 of the charging-station information DB 216 and location information of the departure place is equal to or smaller than a predetermined value, the charging station 102 of the location information 601 may be regarded as the departure place.

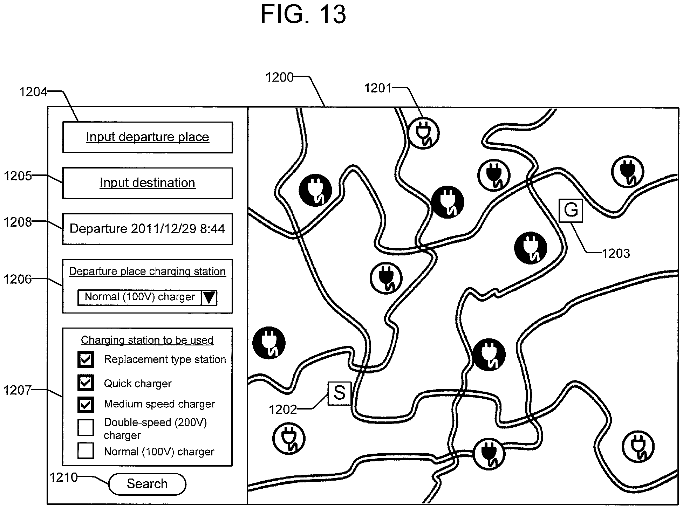

In Fig. 13, a display example of a route search setting screen in the display terminal 103 is shown. The route search setting screen is displayed by, for example, the output device 504.

On the route search setting screen, for example, a map 1200, charging station signs 1201 indicating points of charging stations on the map 1200, a departure place sign 1202 indicating a departure place on the map 1200, and a destination sign 1203 indicating a destination on the map 1200 are displayed. On the route search setting screen, a departure place charging station area 1206 in which information concerning a charging station in the departure place is set and displayed, a charging stations to be used area 1207 in which charging types and the like of charging stations to be used are set and displayed, and a departure time area 1208 in which departure time is set and displayed are displayed. Further, on the route selection setting screen, a departure place area 1204 in which the departure place is set and displayed, a destination area 1205 in which the destination is set and displayed, and a search button 1210 for starting a route search are displayed.

The user can set location information of a departure point in the departure place area 1204. For example, the user can set the location information of the departure point by inputting the present location, predetermined latitude and longitude, an address, a facility name, or the like to the departure place area 1204. When the departure point is set, the departure place sign 1202 representing the departure point is displayed on the map 1200.

The user can set location information of a destination point in the destination area 1205. For example, the user can set the location information of the destination point by inputting predetermined latitude and longitude, an address, a facility name, or the like to the destination area 1205. When the destination point is set, the destination sign 1203 representing the destination point is displayed on the map 1200.

The user can set a charging type of a charging station in a departure place, to the departure place charging station area 1206. For example, the user can set the charging type of the charging station of the departure place by selecting the relevant charging station from a pull-down menu. The display terminal 103 may acquire a charging type of the present charging for the electric automobile 101 and preferentially display the charging type in the departure place charging station area 1206.

The user can set charging stations that the user desires to use in the charging stations to be used area 1207. For example, the user can set the charging stations that the user desires to use by selecting checkboxes of charging types that the user desires to use. The display terminal 103 may acquire charging types matching the electric automobile 101 and display checkboxes of the charging types in the charging stations to be used area 1207 in a state in which the checkboxes are selected in advance. When the charging stations to be used are selected, the charging station sings 1201 matching this condition are displayed on the map 1200. The charging station signs 1201 are desirably signs different for the respective charging types.

When the search button 1210 is pressed by the user, a search for a route from a departure place to a destination matching the set condition is started. A search method for the route is as explained above.

Although not shown in Fig. 13, a plurality of route points may be able to be set. When the route points are present, the display terminal 103 transmits, to the telematics center 100, route search requests respectively for a route from the departure place to a first route point, routes among the route points, and a route from a last route point to the destination, combines route search results of the routes, and displays a route.

Although not shown in Fig. 13, the display terminal 103 may include an area in which a minimum state of charge that the user at least desires to leave can be set. In this case, the telematics center 100 searches for a route that passes through charging stations to prevent a state of charge from falling below the minimum state of charge.

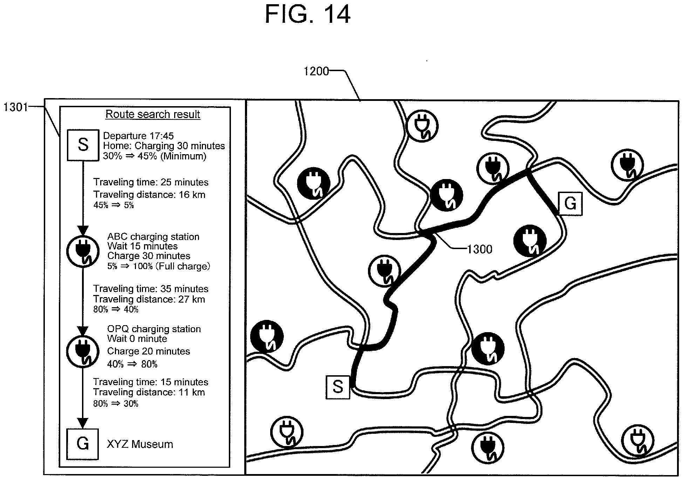

In Fig. 14, a display example of a route search result screen in the display terminal 103 is shown. The route search result screen is displayed by, for example, the output device 504.

The display terminal 103 displays a route 1300, which is a route search result, on the map 1200. The route 1300 is generated by connecting in order a point group of latitudes and longitudes shown in the route information 706 taking into account line shapes of roads.

In a route search result area 1301, information (charging station names, waiting times, charging times, etc.) of charging stations that the electric automobile 101 passes through from a departure place to a destination is displayed. In the route search result area 1301, moving times, moving distances, and the like among points such as the departure place, pass-through charging station points, and the destination are displayed. Further, in the route search result area 1301, predicted values of states of charge (SoCs) at times when the electric automobile 101 reaches the points are displayed.

According to this embodiment, for example, effects explained below are attained. It is possible to derive a route on which a moving time including charging times is the shortest by optimizing the charging times according to charging types of charging stations. Since the information (waiting times, charging times, etc.) of charging stations that the electric automobile 101 passes through, the predicted values of the states of charge (SoCs) at the points, and the like are displayed in the display terminal 103, the user can easily determine which charging stations the user is to pass through between the departure place and the destination.

For example, the display terminal 103 may have the function of the telematics center 100. In this case, the display terminal 103 directly acquires information from the electric automobile 101 or the charging stations 102, searches for a route, and displays a result of the route search. Alternatively, the display terminal 103 searches for a route on the basis of information concerning the electric automobile 101 and the charging stations 102 input from the user and displays a result of the route search.

For example, the display terminal 103 may be a part of components of the electric automobile 101. In this case, the display terminal 103 can directly acquire information from the electric automobile 101.

## Claims

1. A route search system configured to search for a route from a first point to a second point for an electric automobile (101) provided with a battery (304), the route search system comprising:
a route-search processing section (213) configured to, when the electric automobile (101) cannot reach the second point from the first point without the battery (304) being charged in a charging station (102) halfway, execute processing (A) of specifying one or two or more charging stations (102), which the electric automobile (101) is to pass through in order to reach the second point from the first point in a shorter time including a charging time in each of the charging stations (102) and moving times among the charging stations (102), and derive a route for reaching the second point from the first point passing through the specified charging stations (102), wherein
each of the charging stations (102) has information concerning a charging speed, and
the route-search processing section (213) calculates, in the processing (A), the charging time in each of the charging stations (102) on the basis of the charging speed;
**characterized in that**
when calculating a moving time from a certain first charging station (102) to a certain second charging station (102) in the processing (A), the route-search processing section (213) executes processing (B) of determining whether the charging speed of the first charging station (102) is higher than the charging speed of the second charging station (102),
when the determination result of the processing (B) is affirmative, the route-search processing section (213) sets the charging time in the first charging station (102) as a time required for the battery (304) to be fully charged, and
when the determination result of the processing (B) is negative, the route-search processing section (213) sets the charging time in the first charging station (102) as a time required for the battery (304) to be charged by an amount necessary for the electric automobile (101) to reach the second charging station (102).

2. The route search system according to claim 1, wherein, when a charging station (102) is present at the first point, the route-search processing section (213) regards the first point as the first charging station (102) and executes the processing (B).

3. The route search system according to claims 1 or 2, wherein
the charging stations (102) have charging types corresponding to the charging speeds,
usable charging types are set for the electric automobile (101), and
the route-search processing section (213) is configured to set only charging stations (102) corresponding to the charging types usable by the electric automobile (101), as charging stations (102) that the electric automobile (101) is to pass through.

4. The route search system according to any one of claims 1 to 3, wherein
each of the charging stations (102) has usage state information indicating a degree of congestion of charging at a predetermined time, and
the route-search processing section (213) is configured to execute processing (C) of calculating, in the processing (A), the charging time in each of the charging stations (102) on the basis of the usage state information.

5. The route search system according to claim 4, wherein the route-search processing section (213) is configured to calculate, in the processing (C), an arrival time when the electric automobile (101) can reach the charging station (102) from the first point and, when the degree of congestion of full/vacancy information related to the charging station (102) at the arrival time is high, to set the charging time in the charging station (102) to be longer than the charging time when the congestion degree is low.

6. A route search method for searching for a route from a first point to a second point for an electric automobile (101) provided with a battery (304), the route search method comprising:
specifying, when the electric automobile (101) cannot reach the second point from the first point without the battery (304) being charged in a charging station (102) halfway, one or two or more charging stations (102), which the electric automobile (101) is to pass through in order to reach the second point from the first point in a shorter time including a charging time in each of the charging stations (102) and moving times among the charging stations 102), and deriving a route for reaching the second point from the first point passing through the specified charging stations (102), wherein each of the charging stations (102) has information concerning a charging speed, and comprising
calculating, in the processing (A), the charging time in each of the charging stations (102) on the basis of the charging speed,
**characterized in that**
when calculating a moving time from a certain first charging station (102) to a certain second charging station (102) in the processing (A), the route-search processing section (213) executes processing (B) of determining whether the charging speed of the first charging station (102) is higher than the charging speed of the second charging station (102),
when the determination result of the processing (B) is affirmative, the route-search processing section (213) sets the charging time in the first charging station (102) as a time required for the battery (304) to be fully charged, and
when the determination result of the processing (B) is negative, the route-search processing section (213) sets the charging time in the first charging station (102) as a time required for the battery (304) to be charged by an amount necessary for the electric automobile (101) to reach the second charging station (102).

## Patentansprüche

1. Wegstrecken-Suchsystem, das konfiguriert ist, eine Wegstrecke von einem ersten Ort zu einem zweiten Ort für ein Elektrofahrzeug (101), das mit einer Batterie (304) versehen ist, zu suchen, wobei das Wegstrecken-Suchsystem Folgendes umfasst:
einen Wegstrecken-Suchverarbeitungsabschnitt (213), der konfiguriert ist, dann, wenn das Elektrofahrzeug (101) den zweiten Ort ausgehend von dem ersten Ort nicht erreichen kann, ohne dass die Batterie (304) in einer Ladestation auf dem Weg geladen wird, eine Verarbeitung (A) auszuführen, um eine oder zwei oder mehr Ladestationen (102) zu spezifizieren, an denen das Elektrofahrzeug (101) vorbeifahren muss, um den zweiten Ort ausgehend von dem ersten Ort in einer kürzeren Zeit einschließlich der Ladezeit in jeder der Ladestationen (102) und der Bewegungszeiten zwischen den Ladestationen (102) zu erreichen, und eine Wegstrecke abzuleiten, um den zweiten Ort ausgehend von dem ersten Ort und vorbei an den spezifizierten Ladestationen (102) zu erreichen, wobei
jede der Ladestationen (102) Informationen bezüglich einer Ladegeschwindigkeit besitzt und
der Wegstrecken-Suchverarbeitungsabschnitt (213) in der Verarbeitung (A) die Ladezeit in jeder der Ladestationen (102) anhand der Ladegeschwindigkeit berechnet;
**dadurch gekennzeichnet, dass**
dann, wenn eine Bewegungszeit von einer bestimmten ersten Ladestation (102) zu einer bestimmten zweiten Ladestation (102) in der Verarbeitung (A) berechnet wird, der Wegstrecken-Suchverarbeitungsabschnitt (213) eine Verarbeitung (B) ausführt, um zu bestimmen, ob die Ladegeschwindigkeit der ersten Station (102) höher als die Ladegeschwindigkeit der zweiten Ladestation (102) ist,
dann, wenn das Bestimmungsergebnis der Verarbeitung (B) positiv ist, der Wegstrecken-Suchverarbeitungsabschnitt (213) die Ladezeit in der ersten Ladestation (102) als eine Zeit einstellt, die erforderlich ist, damit die Batterie (304) vollständig geladen wird, und
dann, wenn das Bestimmungsergebnis der Verarbeitung (B) negativ ist, der Wegstrecken-Suchverarbeitungsabschnitt (213) die Ladezeit in der ersten Ladestation (102) als eine Zeit einstellt, die erforderlich ist, damit die Batterie (304) um einen Betrag geladen wird, der notwendig ist, damit das Elektrofahrzeug (101) die zweite Ladestation (102) erreicht.

2. Wegstrecken-Suchsystem nach Anspruch ein, wobei dann, wenn eine Ladestation (2) an dem ersten Ort vorhanden ist, der Wegstrecken-Suchverarbeitungsabschnitt (213) den ersten Ort als die erste Ladestation (102) ansieht und die Verarbeitung (B) ausführt.

3. Wegstrecken-Suchsystem nach den Ansprüchen 1 oder 2, wobei
die Ladestationen (102) von Ladetypen sind, die den Ladegeschwindigkeiten entsprechen,
nutzbare Ladetypen für das Elektrofahrzeug (101) eingestellt sind und
der Wegstrecken-Suchverarbeitungsabschnitt (213) konfiguriert ist, nur Stationen (102), die den Ladetypen entsprechen, die durch das Elektrofahrzeug (101) nutzbar sind, als Ladestationen (102) einzustellen, an denen sich das Elektrofahrzeug (101) vorbei bewegen soll.

4. Wegstrecken-Suchsystem nach einem der Ansprüche 1 bis 3, wobei
jede der Ladestationen (102) Nutzungszustandsinformationen besitzt, die einen Ladeauslastungsgrad zu einer vorgegebenen Zeit angeben, und
der Wegstrecken-Suchverarbeitungsabschnitt (213) konfiguriert ist, eine Verarbeitung (C) auszuführen, um in der Verarbeitung (A) die Ladezeit in jeder der Ladestationen (102) anhand der Nutzungszustandsinformationen zu berechnen.

5. Wegstrecken-Suchsystem nach Anspruch 4, wobei der Wegstrecken-Suchverarbeitungsabschnitt (213) konfiguriert ist, in der Verarbeitung (C) eine Ankunftszeit zu berechnen, zu der das Elektrofahrzeug (101) die Ladestation ausgehend von dem ersten Ort erreichen kann, und dann, wenn der Auslastungsgrad von Belegt/ Frei-Informationen für die Ladestation (102) zu der Ankunftszeit hoch ist, die Ladezeit in der Ladestation (102) länger einzustellen als die Ladezeit bei niedrigem Auslastungsgrad.

6. Wegstrecken-Suchverfahren zum Suchen eine Wegstrecke von einem ersten Ort zu einem zweiten Ort für ein Elektrofahrzeug (101), das mit einer Batterie (304) versehen ist, wobei das Wegstrecken-Suchverfahren Folgendes umfasst:
dann, wenn das Elektrofahrzeug (101) den zweiten Ort ausgehend von dem ersten Ort nicht erreichen kann, ohne dass die Batterie (304) in einer Ladestation (102) auf dem Weg geladen wird, Spezifizieren einer oder zweier oder mehrerer Ladestationen (102), an denen das Elektrofahrzeug (101) vorbeifahren muss, um den zweiten Ort ausgehend von dem ersten Ort in einer kürzeren Zeit einschließlich einer Ladezeit in jeder der Ladestationen (102) und der Bewegungszeiten zwischen den Ladestationen (102) zu erreichen, und Ableiten eine Wegstrecke, um den zweiten Ort ausgehend von dem ersten Ort vorbei an den spezifizierten Ladestationen (102) zu erreichen, wobei jede der Ladestationen (102) Informationen bezüglich einer Ladegeschwindigkeit besitzt, und das Folgendes umfasst:
Berechnen in der Verarbeitung (A) der Ladezeit in jeder der Ladestationen (102) anhand der Ladegeschwindigkeit,
**dadurch gekennzeichnet, dass**
dann, wenn eine Bewegungszeit von einer bestimmten ersten Ladestation (102) zu einer bestimmten zweiten Ladestation (102) in der Verarbeitung (A) berechnet wird, der Wegstrecken-Suchverarbeitungsabschnitt (213) eine Verarbeitung (B) ausführt, um zu bestimmen, ob die Ladegeschwindigkeit der ersten Ladestation (102) höher als die Ladegeschwindigkeit der zweiten Ladestation (102) ist,
dann, wenn das Bestimmungsergebnis der Verarbeitung (B) positiv ist, der Wegstrecken-Suchverarbeitungsabschnitt (213) die Ladezeit in der ersten Ladestation (102) als eine Zeit einstellt, die erforderlich ist, damit die Batterie (304) vollständig geladen wird, und
dann, wenn das Bestimmungsergebnis der Verarbeitung (B) negativ ist, der Wegstrecken-Suchverarbeitungsabschnitt (213) die Ladezeit in der ersten Ladestation (102) als eine Zeit einstellt, die erforderlich ist, damit die Batterie (304) um einen Betrag geladen wird, der notwendig ist, damit das Elektrofahrzeug (101) die zweite Ladestation (102) erreicht.

## Revendications

1. Système de recherche d'itinéraire configuré pour rechercher un itinéraire depuis un premier point jusqu'à un second point pour une automobile électrique (101) équipée d'une batterie (304), le système de recherche d'itinéraire comprenant :
une section de traitement de recherche d'itinéraire (113) configurée pour, quand l'automobile électrique (101) ne peut pas atteindre le second point depuis le premier point sans que la batterie (304) soit chargée dans une station de charge (102) à mi-chemin, exécuter un traitement (A) consistant à spécifier une ou deux ou plusieurs stations de charge (102) auxquelles l'automobile électrique (101) doit passer afin d'atteindre le second point depuis le premier point dans un temps plus court incluant un temps de charge dans chacune des stations de charge (102) et des temps de déplacement parmi les stations de charge (102), et dériver un itinéraire pour atteindre le second point depuis le premier point en passant par les stations de charge spécifiées (102), dans lequel
chacune des stations de charge (102) comprend une information concernant une vitesse de charge, et
la section de traitement de recherche d'itinéraire (213) calcule, dans le traitement (A), le temps de charge dans chacune des stations de charge (102) sur la base de la vitesse de charge ;
**caractérisé en ce que**
lorsqu'elle calcule un temps de déplacement depuis une certaine première station de charge (102) jusqu'à une certaine seconde station de charge (102) dans le traitement (A), la section de traitement de recherche d'itinéraire (113) exécute un traitement (B) consistant à déterminer si la vitesse de charge de la première station de charge (102) est plus élevée que la vitesse de charge de la seconde station de charge (102),
quand le résultat de détermination du traitement (B) est affirmatif, la station de traitement de recherche d'itinéraire (213) fixe le temps de charge dans la première station de charge (102) en tant que temps requis pour que la batterie (304) soit totalement chargée, et quand le résultat de détermination du traitement (B) est négatif, la section de traitement de recherche d'itinéraire (213) fixe le temps de charge dans la première station de charge (102) en tant que temps requis pour que la batterie (304) soit chargée d'une quantité nécessaire pour que l'automobile électrique (101) atteigne la seconde station de charge (102).

2. Système de recherche d'itinéraire selon la revendication 1, dans lequel, quand une station de charge (102) est présente au premier point, la section de traitement de recherche d'itinéraire (113) considère le premier point comme étant la première station de charge (102) et exécute le traitement (B).

3. Système de recherche d'itinéraire selon les revendications 1 ou 2, dans lequel
les stations de charge (102) ont des types de charge correspondant aux vitesses de charge,
des types de charge utilisables sont fixés pour l'automobile électrique (101), et
la section de traitement de recherche d'itinéraire (113) est configurée pour fixer uniquement des stations de charge (102) correspondant aux types de charge utilisables par l'automobile électrique (101), à titre de station de charge (102) que l'automobile électrique (101) doit traverser.

4. Système de recherche d'itinéraire selon l'une quelconque des revendications 1 à 3, dans lequel
chacune des stations de charge (102) possède des informations d'état d'utilisation indiquant un degré de congestion pour la charge à un temps prédéterminé, et
la section de traitement de recherche d'itinéraire (113) est configurée pour exécuter un traitement (C) consistant à calculer, dans le traitement (A), le temps de charge dans chacune des stations de charge (102) sur la base de l'information d'état d'utilisation.

5. Système de recherche d'itinéraire selon la revendication 4, dans lequel la section de traitement de recherche d'itinéraire (213) est configuré pour calculer, dans le traitement (C), un temps d'arrivée quand l'automobile électrique (101) peut atteindre la station de charge (102) depuis le premier point et, quand le degré de congestion des informations occupée/libre en relation avec la station de charge (102) au temps d'arrivée est élevé, pour fixer le temps de charge dans la station de charge (102) pour qu'il soit plus long que le temps de charge quand le degré de congestion est faible.

6. Procédé de recherche d'itinéraire pour rechercher un itinéraire depuis un premier point jusqu'à un second point pour une automobile électrique (101) équipée d'une batterie (304), le procédé de recherche d'itinéraire comprenant les étapes consistant à :
spécifier, quand l'automobile électrique (101) ne peut pas atteindre le second point depuis le premier point sans que la batterie (304) soit chargée dans une station de charge (100) à mi-chemin, une ou deux ou plusieurs stations de charge (100), auxquelles l'automobile électrique (101) doit passer dans l'ordre pour atteindre le second point depuis le premier point dans un temps plus court incluant un temps de charge dans chacune des stations de charge (100) et des temps de déplacement parmi les stations de charge (100), et à dériver un itinéraire pour atteindre le second point depuis le premier point en passant par les stations de charge spécifiées (100), dans lequel chacune des stations de charge (100) possède une information concernant une vitesse de charge, et comprenant
l'étape consistant à calculer, dans le traitement (A), le temps de charge dans chacune des stations de charge (100) sur la base de la vitesse de charge,
**caractérisé en ce que**
lorsqu'elle calcule un temps de déplacement depuis une certaine première station de charge (100) jusqu'à une certaine seconde station de charge (100) dans le traitement (A), la section de traitement de recherche d'itinéraire (213) exécute un traitement (B) consistant à déterminer si la vitesse de charge de la première station de charge (100) est plus élevée que la vitesse de charge de la seconde station de charge (100),
quand le résultat de détermination du traitement (B) est affirmatif, la section de traitement de recherche d'itinéraire (213) fixe le temps de charge dans la première station de charge (100) en tant que temps requis pour que la batterie (304) soit totalement chargée, et
quand le résultat de détermination du traitement (B) est négatif, la section de traitement de recherche d'itinéraire (213) fixe le temps de charge dans la première station de charge (100) en tant que temps requis pour que la batterie (304) soit chargée d'une quantité nécessaire pour que l'automobile électrique (101) atteigne la seconde station de charge (100).
